# EUROPEAN PATENT APPLICATION

(11) **EP 1 936 848 A1**
(43) Date of publication of application: **25.06.2008**
(21) Application number: 07150321.3
(22) Date of filing: 21.12.2007
(51) Int. Cl.: H04J 3/06

(54) **Integrated phase lock loop and network PHY or switch**

(30) Priority: 21.12.2006 US 871186; 22.06.2007 GB 0712039
(71) Applicant: Zarlink Semiconductor Inc., Kanata, Ontario K2K 3H4 (CA)
(72) Inventor: Burke, Peter, Carp Ontario K0A 1L0 (CA); GAULIN, Louise, K2H 1A8 Ontario Nepean (CA); RODRIGUES, Silvana Goncala, Kanata Ontario K2M 2N5 (CA); GALLANT, Daniel Norman, Nepean Ontario K6G 6S5 (CA); SEIDO, Maamoun Abou, Kanata Ontario K2T 1H5 (CA)
(74) Representative: Harding, Richard Patrick

(57) **Abstract**

A node in for connection to a synchronous packet network includes a packet switch and a physical interface for connection to the packet network. A phase locked loop arrangement for synchronization is integrated into the physical interface, the packet switch or both.

## Description

### Field of the Invention.

This invention relates to the field of digital communications, and in particular to a packet switched network.

### Background of the Invention

As the traditional circuit switched telephone network migrates to a packet switched network, there are many applications that require synchronization, such as traditional time division multiplexed (TDM) services, cellular base stations, etc.

Timing synchronization is critical in the distributed networks found in today's network environments. As the network services continue to increase, the challenges involved with providing accurate time to systems and applications also increase.

In traditional networks, synchronization is transported and distributed by Synchronous Digital Hierarchy (SDH) networks. As the network evolves, legacy equipments with TDM interfaces (i.e., STM-N) are mixed with Gigabit Ethernet interfaces. Emerging technologies, such as CES (Circuit Emulation Services), are designed to transport synchronous circuits, such as T1/E1, over asynchronous networks. This type of technology requires the transport of accurate clock information over the packet network.

In packet networks there are several methods for transporting clocks or timing signals from one node to another. The packet based method is based on the times of arrival of packets transmitted over the network. An alternative solution is to use Synchronous Ethernet, wherein the physical line clock is lockable to an external reference source.

Synchronous Ethernet technology allows service providers to deliver time-sensitive services, such as voice and video, over a single converged, high-bandwidth, synchronous Ethernet link.

Traditional dedicated-media full-duplex Ethernet transmits continuously. The physical layer transmitter clock of these signals is derived from an inexpensive +/- 100ppm crystal, and the receiver locks onto it. There is no need for long-term frequency stability as the data is packetized and can be buffered. For the same reason there is no need for consistency between the frequencies of different links between various nodes of the network.

In Synchronous Ethernet technology the physical layer transmitter clock is derived from a high quality frequency reference by replacing the crystal of traditional Ethernet with a frequency source traceable to a primary reference clock. This change does not effect the operation of any of the Ethernet layers. The receiver at the other end of the link automatically locks onto the physical layer clock of the received signal, and thus itself gains access to a highly accurate and stable frequency reference. This receiver locks the transmission clock of its other ports to this frequency reference.

By feeding one network element in an Ethernet network with a Primary Reference Clock, and employing Ethernet PHY circuitry with well-engineered timing recovery circuitry of the type standard in SONET/SDH networks, a fully time synchronized network can in theory be set up. Unlike TDM networks, this timing accuracy is not required for the proper functioning of the data plane, which could function perfectly well with relatively inaccurate and inconsistent physical layer clocks. Rather it provides access to a highly accurate and stable frequency reference to applications that need it, such as cellular base stations and TDMoIP gateways.

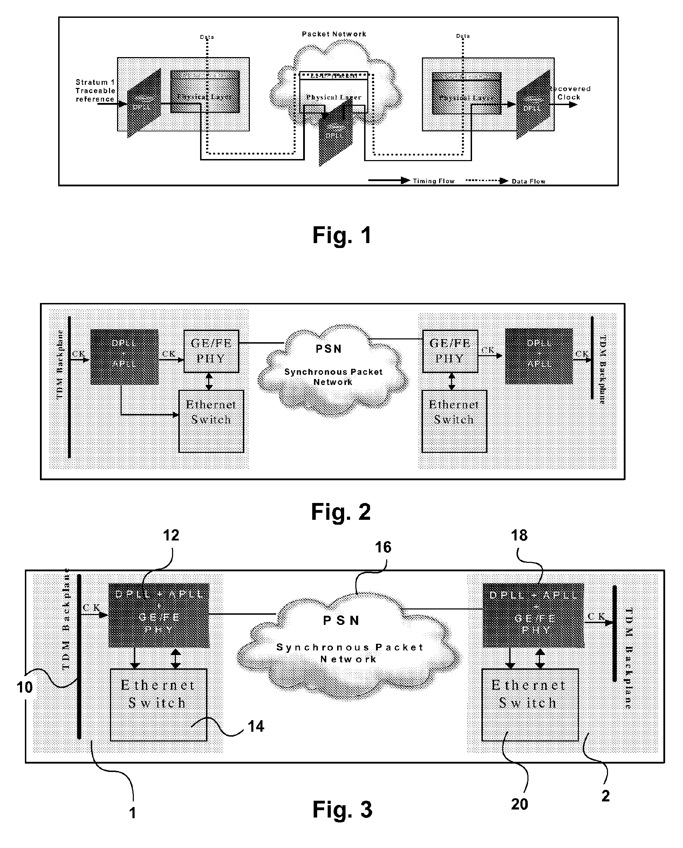

One example of a Synchronous Ethernet solution is shown in Figure 1. A stratum 1 traceable reference is injected into the Digital Phase Lock Loop (DPLL). The DPLL contains an integrated analog phase lock loop (APLL) to clean up the jitter. The DPLL provides wander and jitter filtering and it translates telecom clocks to Ethernet clocks. Figure 2 shows an embodiment employing a two-chip solution. Although this solution in theory allows the transmission of timing across the network as discussed above, the applicants have found this method of transmitting timing information is inadequate for carrier grade networks.

### Summary of the Invention

Surprisingly, the applicants have found that by integrating the phase locked loop internally into the physical interface (PHY), the problems of the prior art can be overcome, and sufficient timing accuracy for carrier grade networks can be achieved. The integration of a timing function into the Ethernet PHY and/or Ethernet Switch enables functions that are not available in traditional Synchronous Ethernet solutions using an Ethernet PHY and/or Ethernet Switch with an external PLL. The present invention provides an integrated solution for Synchronous Ethernet, where a Synchronous Ethernet phase locked loop (PLL) is integrated into the PHY (physical interface), or into the Ethernet switch, or they are all integrated together.

Thus, in accordance with the invention there is provided a node for connection to a synchronous packet network, wherein the network is locked to primary reference source, comprising a physical interface for connection to the packet network; a packet switch for processing packets; and a phase locked loop for generating a timing signal; and wherein said phase locked loop is integrated into the physical interface or the packet switch. In this way a solution for Synchronous Ethernet can be provided with a single device.

According to a second aspect of the invention there is provided a physical interface for use in a synchronous packet network, wherein the network is locked to primary reference source and the physical interface is operable in either a master or slave mode, comprising, integrated on to a single, chip a network interface for connection to a packet network link; a timing recovery unit for recovering clock signals from the packet network link; a phase locked loop for generating a timing signal for use by the interface having a reference input; a mode signal generator for generating a mode signal indicating whether said physical interface is in the master or slave mode; and a multiplexer for applying said clock signals from the timing recovery unit or an external signal from a primary reference source to said reference input depending on the mode state of the interface.

The invention may employ a PHY in combination with an analog and digital PLL.

The integration of the timing function into the Ethernet PHY and/or Ethernet Switch enables functions that are not available using today's synchronous Ethernet solutions using an Ethernet PHY and/or Ethernet Switch with an external PLL.

The invention also relates to a method of transmitting data over an interface for use in a synchronous packet network, wherein the network is locked to primary reference source and the physical interface is operable in either a master or slave mode, comprising recovering received clock signals from incoming datapath; and generating transmitted clock signals for an outgoing datapath with a phase locked loop; and wherein said phase locked loop uses as its reference a primary reference source or said recovered clock signals depending on whether said interface is in a master or slave mode.

### Brief Description of the Drawings

The invention will now be described in more detail, by way of example only, with reference to the accompanying drawings, in which:-
Figure 1 is a diagram showing the concept of Synchronous Ethernet;
Figure 2 is a block diagram of a prior art solution;
Figure 3 is a block diagram of an embodiment wherein a Synchronous Ethernet has a PLL integrated into the PHY;
Figure 4 is a block diagram of a different embodiment of the invention;
Figure 5 is a block diagram of a another embodiment of the invention; and
Figure 6 is a block diagram showing the component parts of a PHY with an integrated phase locked loop on a single chip.

### Detailed Description of the Preferred Embodiments

In a Synchronous Ethernet, multiple nodes are interconnected by physical links. Timing information is transported between the nodes over a datapath by the physical layer, which is locked or traceable to a primary reference source. The physical layer of the Ethernet is thus used to deliver synchronization signals.

Data packets are transmitted from a transmitting PHY over the datapath including the physical link to a receiving PHY. The transmitting PHY sets the timing for the link. At the receiving PHY, a clock signal can be generated from the incoming bit stream in a similar manner to traditional SONET/SDH/PDH PLLs. Each node in the Packet Network that is part of the synchronous Ethernet chain recovers the clock from upstream node and distributes the clock to the downstream node, relying on physical layer only. The performance of the recovered clock is independent of network loading and it is not influenced by any impairments associated with the packet network (e.g., queuing, routing, packet delay variation, etc).

In accordance with embodiments of the invention, as shown in Figure 3, the Phase Lock Loop is integrated with a Gigabit or Fast Ethernet PHY at a first node lin a single chip. In Figure 3, TDM backbone 10 is connected to an integrated DPLL and APLL (Analog phase locked loop) and PHY interface 12, where the PHY interface is a physical Ethernet interface as known in the art. The PHY interface 12 is connected to Ethernet switch 14 over a bi-directional link.

The PHY interface 12 is in turn connected to the Synchronous Ethernet network 16, which in turn is connect to a similar integrated PHY 18 at node 2, connected to Ethernet switch 20. PHY 18 is connected to TDM backbone 22. As noted the DPLL and APPL is integrated into the PHY at each end.

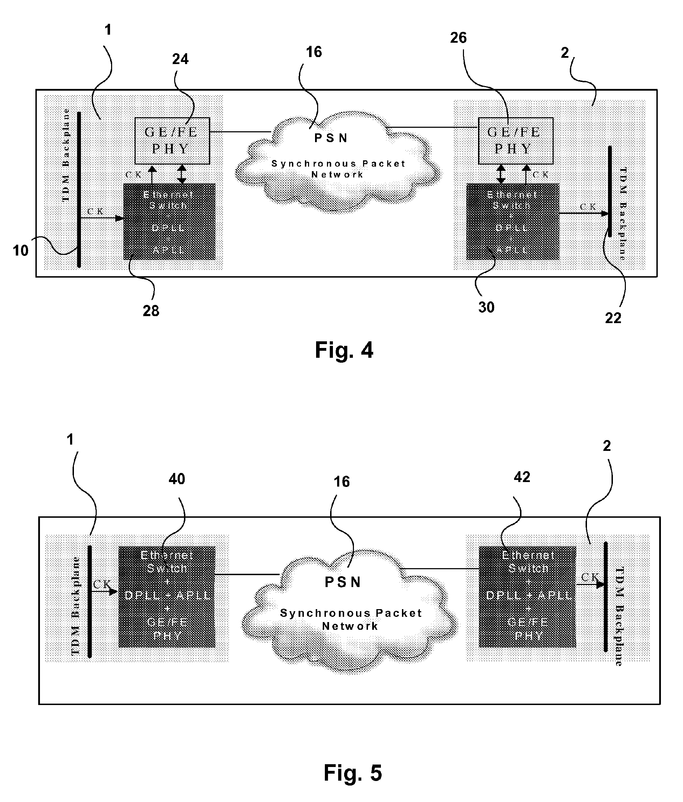

In an alternative embodiment, shown in Figure 4, a possible variation is to integrate the Ethernet switch with the Synchronous Ethernet Phase Lock Loop in one-chip solution. Several Ethernet ports can also be integrated in one chip. In this case the PHYs 24, 26 remain separate. The Ethernet switch is integrated with the DPLL and APLL.

In the embodiment shown in Figure 5, the Ethernet switch, the Phase Lock Loop and the PHY are integrated together in an on-chip solution. Several Ethernet ports can also be integrated in one chip.

In accordance with embodiments of the invention, the timing function provides a clock which is synchronized to a traceable reference(s). The timing function selects its reference(s) based on the mode of the Ethernet PHY (master or slave). The timing function is also able to detect when its synchronization source(s) is (are) no longer available and enter a holdover mode.

Holdover is the operation of the timing function where it holds on to the last frequency while it was synchronized to a given source. The holdover function may be based on historical frequency data collected while it was synchronized to a given source.

Since the timing information is transported by the physical, layer of the Ethernet, the clock signal can be generated from incoming bit stream in a similar matter to traditional SONET/SDH/PDH PLLs. Each node in the Packet Network that is part of the synchronous Ethernet chain recovers the clock from upstream node and distributes the clock to the downstream node relying on physical layer only. The performance of the recovered clock is independent of network loading and it is not influenced by any impairments associated with the packet network (e.g., queuing, routing, packet delay variation, etc).

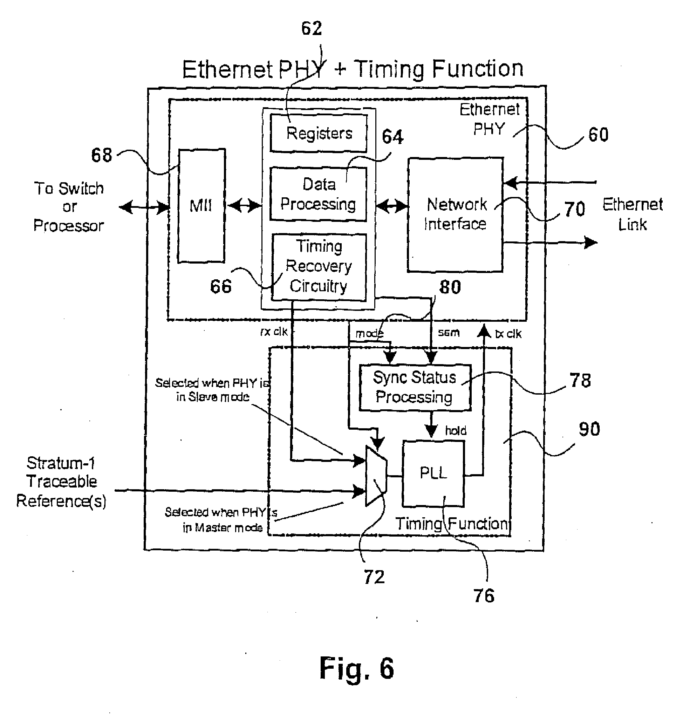

In Figure 6, which shows one embodiment of an integrated PHY in accordance with the invention, an Ethernet PHY 60 communicates with timing function block 90. The Ethernet PHY 60 includes registers 62, data processing block 64, and timing recovery circuitry 66. The timing recovery circuitry can recover the clock using conventional recovery techniques in a manner similar to SONET.

The data processing block 64 is connected to an Ethernet MII interface 68, which in turn is connected to a switch or processor (not shown). MII is an Ethernet industry standard defined in IEEE 802.3, the contents of which are herein incorporated by reference. The data processing unit 64 is connected to network interface 70, which is connected to an external Ethernet link.

The timing recovery circuitry outputs a recovered clock signal rx clk to timing function block 90 and provides one input to multiplexer 72. This has a second input connected to a stratum-1 traceable reference 74, which could be derived from a TDM network. When two PHYs connect to each other, they auto-negotiate to determine which will be the master and which will be the slave. The timing recovery circuit 66, integrated into the PHY, outputs an internal mode signal 80 which indicates whether the PHY is in the master or slave mode that is determined during auto-negotiation during initial set up. Each PHY then operates in the negotiated state, and this is represented by the internal mode signal 80 applied to the select input of the multiplexer 72 and to the sync status processing unit 78. One of the advantages of integrating the PLL into the PHY 12 is that the PLL has access to this signal, which is not available to an external PLL.

The internal mode signal 80 is applied to the select input of the multiplexer 72 to select either the stratum-1 reference or the rx clk signal as an input to PLL 76 depending on whether the PHY is in master or slave mode.

The timing recovery circuit 66 also outputs to the timing function block an ssm (sync status messaging) signal, which is a necessary part of transmitting timing in a carrier grade network. This is normally embedded in the overhead of the datapath by the master PHY. Typically, the slave PHY recovers the ssm signal and the clock from the datapath provided by the master.

The sync status processor 78 extracts the ssm from the datapath and determines if the recovered clock is suitable for use as a reference to the PLL. If sync status processor 78 determines the synchronization source is no longer available, the sync status processing unit 78 puts the PLL 76 into holdover mode, whereupon it maintains it output, for example, based on historical data.

The invention can also be applied to a home network. This can be used inside the home to support synchronization for home networking.

## Claims

1. A node for connection to a synchronous packet network, wherein the network is locked to primary reference source, comprising:
a physical interface for connection to the packet network;
a packet switch for processing packets;
and a phase locked loop for generating a timing signal; and
wherein said phase locked loop is integrated into the physical interface or the packet switch.

2. A node as claimed in claim 1, wherein the physical interface and said packet switch are integrated into said single chip with said phase locked loop.

3. A node as claimed in any one of claims 1 to 3, wherein the packet switch is an Ethernet switch.

4. A physical interface for use in a synchronous packet network, wherein the network is locked to primary reference source and the physical interface is operable in either a master or slave mode, comprising, integrated on to a single, chip:
a network interface for connection to a packet network link;
a timing recovery unit for recovering clock signals from the packet network link;
a phase locked loop for generating a timing signal for use by the interface having a reference input;
a mode signal generator for generating a mode signal indicating whether said physical interface is in the master or slave mode; and
a multiplexer for applying said clock signals from the timing recovery unit or an external signal from a primary reference source to said reference input depending on the mode state of the interface.

5. A physical interface as claimed in claim 4, wherein said mode signal generator controls said multiplexer to select said primary reference source when said interface is an a master mode and said clock signals recovered from the packet network link when said interface is in a slave mode.

6. A physical interface as claimed in claim 5, wherein said primary reference source is a traceable stratum-1 reference.

7. A physical interface as claimed in claim 5, further comprising a synchronization status processing unit for placing said phase locked loop in holdover mode when said physical interface is in slave mode and synchronization is lost.

8. A physical interface as claimed in claim 7, wherein the synchronization status processing unit is responsive to a synchronization status messaging signal inserted in the header of a datapath of incoming data.

9. A physical interface as claimed in claim 3, wherein said phase locked loop is outputs a transmission timing signal for said interface.

10. A physical interface as claimed in claim 4, further comprising a data processing unit connected to said network interface and a second interface for connection to a switch or processor.

11. A physical interface as claimed in claim 10, wherein said second interface is an MII interface.

12. A physical interface as claimed in claim 4, wherein said phase locked loop is an analog digital phase locked loop.

13. A physical interface as claimed in claim 4, wherein said synchronous packet network is a synchronous Ethernet network.

14. A method of transmitting data over an interface for use in a synchronous packet network, wherein the network is locked to primary reference source and the physical interface is operable in either a master or slave mode, comprising:
recovering received clock signals from incoming datapath; and
generating transmitted clock signals for an outgoing datapath with a phase locked loop; and
wherein said phase locked loop uses as its reference a primary reference source or said recovered clock signals depending on whether said interface is in a master or slave mode.

15. A method as claimed in claim 14, wherein said reference is selected by a multiplexer responsive to an internal mode signal.

16. A method as claimed in claim 14, further comprising detecting loss of synchronization in said recovered clock signals when said interface is in the slave mode, and placing said phase locked loop into a holdover mode in response to the detection of loss of synchronization.

17. A method as claimed in claim 16, wherein said loss of synchronization is detected from a synchronization status message inserted in the datapath.
